# EUROPEAN PATENT APPLICATION

(11) **EP 4 250 403 A1**
(43) Date of publication of application: **27.09.2023**
(21) Application number: 21897080.4
(22) Date of filing: 25.11.2021
(51) Int. Cl.: H01M 4/62, H01M 10/0525, H01M 4/04, H01M 4/139, H01M 4/13, H01B 1/20, C08F 220/56, C08F 236/04, C08F 236/06, C08F 236/08, C08F 236/12, C08F 220/44, C08F 220/18

(54) **DISPERSANT FOR LITHIUM ION BATTERY, PREPARATION METHOD THEREFOR, POSITIVE ELECTRODE SLURRY AND LITHIUM ION BATTERY**

(30) Priority: 28.11.2020 CN 202011361699
(71) Applicant: BYD Company Limited, Shenzhen, Guangdong 518118 (CN)
(72) Inventor: YANG, Jixiang, Shenzhen, Guangdong 518118 (CN); CHEN, Yongkun, Shenzhen, Guangdong 518118 (CN); TANG, Fulan, Shenzhen, Guangdong 518118 (CN); HAO, Rong, Shenzhen, Guangdong 518118 (CN)
(74) Representative: Arnold & Siedsma
(86) International application number: PCT/CN2021/133138
(87) International publication number: WO 2022/111580

(57) **Abstract**

A dispersant for a lithium ion battery and a preparation method thereof, a positive slurry, and a lithium ion battery are provided. The dispersant includes a structural unit A derived from a solvophilic monomer, a structural unit B derived from a conjugated diene monomer, and a structural unit C derived from a high-adhesion monomer. The solvophilic monomer includes one or both of N-vinylpyrrolidone and an acrylamide monomer. The high-adhesion monomer includes one or both of an unsaturated nitrile monomer and an acrylate monomer.

## Description

### CROSS REFERENCE TO RELATED APPLICATIONS

The present disclosure claims priority to Chinese Patent Application No. 202011361699.6, entitled "DISPERSANT FOR LITHIUM ION BATTERY AND PREPARATION METHOD THEREOF, POSITIVE SLURRY, POSITIVE PLATE, AND LITHIUM ION BATTERY" and filed on November 28, 2020. The entire content of the above-referenced application is incorporated herein by reference.

### FIELD

The present disclosure relates to the technical field of lithium ion batteries, and more specifically, to a dispersant for a lithium ion battery and a preparation method thereof, a positive slurry, and a lithium ion battery.

### BACKGROUND

Components of a positive slurry of a lithium ion battery mainly includes a positive active material, a conductive agent, a binder, and a solvent. In response to increasing requirements for battery performance, increasing requirements are imposed on a manufacturing process of a positive slurry of a battery. On the one hand, a dispersion effect of a positive active material and a conductive agent in the positive slurry needs to be improved to improve the uniformity of a positive plate. On the other hand, a solid content of the positive slurry needs to be increased to improve the coating performance of the positive slurry and improve the yield and productivity of the positive plate. Adding dispersant additives to the positive slurry becomes a mainstream method in the industry to improve the dispersion effect of the positive slurry.

Few types of dispersants are applicable to existing lithium ion batteries, mainly including polyvinyl pyrrolidone (PVP) and polyacrylamide (PAM). However, these dispersants have a limited dispersion capability for the positive slurry, and are usually added at a large amount, which, however, correspondingly reduces a mass ratio of the positive active material in the positive material layer formed by the positive slurry, thus reducing a specific capacity of a battery. Therefore, dispersants having an excellent dispersion capability for the positive slurry need to be developed to achieve a desirable slurry dispersion effect with a small dosage of dispersant.

### SUMMARY

In view of the above, embodiments of the present disclosure provide a dispersant for a lithium ion battery and a preparation method thereof, a positive slurry, and a lithium ion battery. The dispersant for a lithium ion battery may have functions of both a binder and a dispersant, and can reduce an amount of binder used in an existing positive slurry, which can satisfy a requirement for a high dispersion of the positive slurry while avoiding a reduction of a specific capacity of a battery caused by a reduction of a content of a positive active material.

In a first aspect, the present disclosure provides a dispersant for a lithium ion battery. The dispersant includes a structural unit A derived from a solvophilic monomer, a structural unit B derived from a conjugated diene monomer, and a structural unit C derived from a high-adhesion monomer. The solvophilic monomer includes one or both of N-vinylpyrrolidone and an acrylamide monomer. the high-adhesion monomer includes one or both of an unsaturated nitrile monomer and an acrylate monomer.

The structural unit B derived from the conjugated diene monomer is configured to provide a molecular skeleton function for the dispersant, and enables a molecular chain of the dispersant to have a certain flexibility, so that the dispersant has a low electrolyte swelling property. The solvophilic monomer is configured to provide the dispersant with the structural unit A that has strong affinity with a solvent of a positive slurry (such as N-methylpyrrolidone (NMP) or N, N-dimethylformamide (DMF)), to increase the solubility of the dispersant with the solvent of the positive slurry. The high-adhesion monomer is configured to enable the dispersant to have the structural unit C of nitrile and/or ester polar groups, so that the dispersant generates a strong intermolecular interaction to dispersed particles (positive active material particles, conductive agent particles, and the like), and therefore can be easily adsorbed on surfaces of the dispersed particles and an interface of the solvent, thereby enabling the positive material, the conductive agent, and the like to achieve excellent dispersion effects in the positive slurry of the lithium ion battery, and preventing the dispersed particles from reuniting again. In addition, a dispersion time is short, and a low dispersant dosage is required. In addition, during drying of the positive slurry, the dispersant may be used to bond the dispersed particles or bond the dispersed particles and the current collector, to provide a function of a binder, thereby avoiding a reduction of the mass ratio of the positive active material in the positive slurry.

Therefore, the dispersant has the dispersion and bonding functions, which can ensure excellent dispersion effects of the positive active material and the conductive agent in the positive slurry of the lithium ion battery. Moreover, the dispersant can partially or completely replace the binder in the positive slurry, so that the content of the positive active substances in the positive plate prepared from the positive slurry can substantially remain unchanged, thereby avoiding a reduction of the energy density of the battery due to the addition of the dispersant.

In some implementations of the present disclosure, the dispersant includes a copolymer including the structural unit A, the structural unit B, and the structural unit C. The copolymer may include any one or more of a random structure, a block structure, an alternating structure, and a graft copolymerization structure.

In some implementations of the present disclosure, based on a total amount of the dispersant, a molar proportion of the structural unit A is in a range of 5%-50%, a molar proportion of the structural unit B is in a range of 30%-90%, and a molar proportion of the structural unit C is in a range of 1%-30%. In this way, the dispersant can have a certain affinity to solvents, a certain affinity to to-be-dispersed particles, and a certain flexibility, thereby achieving a desirable dispersion effect.

In some implementations of the present disclosure, the acrylamide monomer includes one or more of acrylamide, methylacrylamide, N, N-dimethylacrylamide, N-hydroxymethylacrylamide, N-butoxymethylacrylamide, N-hydroxymethylmethylacrylamide, and N-butoxymethylmethylacrylamide.

In some other implementations of the present disclosure, the solvophilic monomer is N-vinylpyrrolidone. Compared with the acrylamide monomer, the N-vinylpyrrolidone has higher structural stability and higher affinity to the most common solvent in the positive slurry, that is, NMP.

In some implementation of the present disclosure, a carbon atom number of the conjugated diene monomer is not less than 4, such as 4-12. Exemplarily, the conjugated diene monomer may include one or more of 1,3-butadiene, isoprene, 2,3-dimethyl-1,3-butadiene, 2-chloro-1,3-butadiene, 1,3-pentadiene, 1,3-hexadiene, 1,3-decadiene, and 2-methyl-1,5-heptadiene.

In some implementation of the present disclosure, the unsaturated nitrile monomer includes one or more of acrylonitrile, α-methacrylonitrile, α-ethylacrylonitrile, butenenitrile (such as 3-butenenitrile or 2-butenenitrile), 2-methyl-2-butenenitrile, 2-methyl-3-butenenitrile, 4-methyl-3-pentanenitrile, α-chloroacrylonitrile, α-bromoacrylonitrile, 2-ethoxyacrylonitrile, and 3,3-dimethoxy-2-acrylonitrile.

In some implementation of the present disclosure, the acrylate monomer includes one or more of alkyl acrylate, alkyl methacrylate, hydroxyalkyl acrylate, and hydroxyalkyl methacrylate. Exemplary acrylate monomers may include methyl acrylate, methyl methacrylate, ethyl acrylate, ethyl methacrylate, propyl acrylate, propyl methacrylate, butyl acrylate, butyl methacrylate, tert butyl acrylate, tert butyl methacrylate, 2-ethylhexyl acrylate, 2-ethylhexyl methacrylate, dodecyl acrylate, dodecyl methacrylate, 2-hydroxyethyl acrylate, 2-hydroxyethyl methacrylate, 2-hydroxypropyl acrylate, 2-hydroxypropyl methacrylate, glycidyl acrylate, glycidyl methacrylate, but are not limited thereto.

In some implementations of the present disclosure, the high-adhesion monomer is the unsaturated nitrile monomer. Compared with the acrylate monomer, the unsaturated nitrile monomer has a stronger polarity and has more desirable dispersion and bonding functions for the positive active material particles and the conductive agent particles.

In some implementations of the present disclosure, the dispersant is polymerized from a monomer raw material including the solvophilic monomer, the conjugated diene monomer, and the high-adhesion monomer described above. In some other implementations of the present disclosure, the dispersant may be obtained by polymerizing and then hydrogenating the monomer raw material. Hydrogenation of the polymer polymerized from the monomer raw material can reduce double bonds in the polymer polymerized from the monomer raw material, thereby enhancing the antioxidant ability of the dispersant at a high voltage.

In some implementation of the present disclosure, a weight average molecular weight of the dispersant is in a range of 100000-600000. The dispersant with the weight average molecular weight in the range can have desirable mechanical properties such as stiffness and desirable flexibility, thereby facilitating subsequent processing and utilization. For example, the weight average molecular weight of the dispersant may be 150000, 200000, 300000, 350000, 400000, 450000, 500000, 550000, or 600000.

The dispersant provided in the first aspect of the present disclosure has the dispersion and bonding functions, and can achieve a desirable dispersion effect of the positive active material and the conductive agent in the positive slurry of the lithium ion battery within a short time, and enables the positive slurry to have a high solid content, which can improve the preparation efficiency and the product yield of the positive plate. In addition, the dispersant partially or completely replaces the existing binder in the positive slurry, so that a mass ratio of the positive active material in the positive plate is not reduced, thereby ensuring a battery capacity. Moreover, the dispersant can improve the flexibility of the positive plate.

In a second aspect, the present disclosure provides a method for preparing a dispersant for a lithium ion battery, including:
performing a polymerization reaction on a monomer raw material including a solvophilic monomer, a conjugated diene monomer, and a high-adhesion monomer. The solvophilic monomer includes one or both of N-vinylpyrrolidone and an acrylamide monomer. The high-adhesion monomer includes one or both of an unsaturated nitrile monomer and an acrylate monomer.

In some implementations of the present disclosure, the preparation method further includes: performing a hydrogenation reaction on the ploymer formed through the polymerization reaction of the monomer raw material. In other words, in this case, the method for preparing a dispersant includes: performing the polymerization reaction on the monomer raw material to obtain a dispersant precursor, and performing a hydrogenation reaction on the dispersant precursor. The hydrogenation reaction can reduce some or all double bonds in the dispersant precursor obtained through the polymerization reaction of the monomer raw material, thereby enhancing the antioxidant ability of the dispersant at a high voltage.

In some implementations of the present disclosure, the hydrogenation reaction may be performed by using precious metal such as Pt as a catalyst and hydrogen as a reducing agent.

In some implementations of the present disclosure, based on a total mass of the monomer raw material, a proportion of the solvophilic monomer is in a range of 5%-50%, a proportion of the conjugated diene monomer is in a range of 40%-90%, and a proportion of high-adhesion monomer is in a range of 1%-20%. In some other implementations of the present disclosure, based on a total mass of the monomer raw material, a proportion of the solvophilic monomer is in a range of 5%-30%, a proportion of the conjugated diene monomer is in a range of 50%-80%, and a proportion of high-adhesion monomer is in a range of 5%-20%.

The above polymerization reaction is not special specially defined, which may be, for example, solution polymerization, mulsion polymerization, suspension polymerization, or bulk polymerization. In some implementations of the present disclosure, the above polymerization reaction is the solution polymerization. The solution polymerization includes: dissolving the monomer raw material and an initiator in a solvent, performing polymerization at a specific temperature, and performing solid-liquid separation and drying on a resulting reaction liquid.

The initiator may be a thermal initiator and/or a photoinitiator. For example, the initiator is the thermal initiator. The thermal initiator may be one or more of aqueous initiators such as potassium persulfate, sodium persulfate, and ammonium persulfate, or may be one or more of oily initiators such as azobisisobutyronitrile, azobisisoheptonitrile, and benzoyl peroxide. In this case, a temperature of the polymerization reaction may be in a range 40°C-80°C, and a time of the polymerization reaction may be in a range 2h-24h. The aqueous initiators or the oily initiators may be selected according to the monomer raw material and the solvent that is used.

In some implementations of the present disclosure, in the solution polymerization process, a chain transfer agent may be further added to the solvent to control a molecular chain length of the resulting polymer. Exemplary chain transfer agents may include ethyl acetate, butyl acetate, acetone, diethyl carbonate, methyl tertiary butyl ether, isopropanol, ethanol, methanol, dodecyl mercaptan, and the like.

The method for preparing a dispersant provided in the second aspect of the present disclosure is simple and easy in operation, requires low energy consumption, and has a controllable reaction degree, which is applicable to industrialized production.

A third aspect of the present disclosure further provides a positive slurry. The positive slurry includes a positive active material, a conductive agent, a dispersant, and a solvent. The dispersant is the dispersant described in the first aspect of the present disclosure or a dispersant prepared by using the preparation method described in the second aspect of the present disclosure.

Since the dispersant has the dispersion and bonding functions, the positive slurry may not include the conventional binder in the field of batteries. In this case, it may be understood that the above dispersant completely replaces the binder. In some implementations of the present disclosure, a mass fraction of the dispersant in the positive slurry does not exceed 5%.

Certainly, in other implementations of the present disclosure, the positive slurry may include a binder. In order to avoid reducing a mass fraction of the positive active material in the positive material layer, a sum of the mass fractions of the dispersant and the binder in the positive slurry does not exceed 5%.

The above positive active material, binder, and conductive agent are conventional choices in the field of batteries. The binder may be selected from one or more of polyvinylidene fluoride (PVDF), polytetrafluoroethylene (PTFE), polyvinyl alcohol (PVA), styrene butadiene rubber (SBR), polyacrylonitrile (PAN), polyimide (PI), polyacrylic acid (PAA), polyacrylate, polyolefin, sodium carboxymethyl cellulose (CMC), and sodium alginate. The positive active material may be at least one of lithium iron phosphate, lithium manganese phosphate, lithium manganese iron phosphate, lithium vanadium phosphate, lithium cobalt phosphate, lithium cobalt oxide (LiCoO₂), lithium manganese oxide, lithium nickel oxide, lithium nickel cobalt oxide, lithium nickel manganese oxide, nickel cobalt manganese (NCM) ternary material, and nickel cobalt aluminum (NCA) ternary material. The conductive agent may include at least one of a carbon nanotube, carbon black, and graphene, but is not limited thereto. A surface of the conductive agent may have functional groups such as carboxylic groups or hydroxyl groups, to facilitate dispersion in the positive slurry. The dispersant has desirable affinity to both positive active material particles and conductive agent particles.

The positive slurry provided in the third aspect of the present disclosure has a high solid content, especially a high content of the positive active material, and has desirable dispersibility, is unlikely to settle, and may be stored for a long time.

A fourth aspect of the present disclosure further provides a lithium ion battery. The lithium ion battery includes a positive plate. The positive plate includes a current collector and a positive material layer arranged on the current collector. The positive material layer includes a positive active material, a conductive agent, a binder, and a dispersant. The dispersant is the dispersant described in the first aspect of the present disclosure or a dispersant prepared by using the preparation method described in the second aspect of the present disclosure. The lithium ion battery further includes a negative plate and a membrane and an electrolyte located between the positive plate and the negative plate. It should be noted that the negative plate, the membrane, and the electrolyte are all conventional structures of a battery and therefore are not described in detail herein.

Further, the positive material layer in the lithium ion battery may be formed by coating and drying the positive slurry described in the third aspect of the present disclosure. The positive slurry has a high solid content and a low solvent content, and can be dried in a short time to obtain the positive plate, which improves the preparation efficiency of the positive plate. Since the drying time is short, the positive plate is unlikely to crack, and the yield is high. In addition, the positive plate further has desirable flexibility and can be easily assembled into a battery.

### DETAILED DESCRIPTION

The following provides exemplary implementations of the present disclosure. It should be noted that a person of ordinary skill in the art may make several improvements and refinements without departing from the principles of the present disclosure. These improvements and refinements are considered to fall within the protection scope of the present disclosure.

The present disclosure is further described below through the following embodiments.

### Embodiment 1

A method for preparing a dispersant for a lithium ion battery includes:
dissolving N-vinylpyrrolidone, 1,3-butadiene, and acrylonitrile in N, N-dimethylformamide (DMF) at a mass ratio of 40:40:20, adding an initiator azobisisobutyronitrile and a chain transfer agent dodecyl mercaptan, performing polymerization at 60°C for 4 hours at a pressure of 4 MPa, performing cooling to terminate the reaction, washing and drying a resulting reactant to obtain a dispersant 1', and hydrogenating the dispersant 1' to obtain a dispersant 1. A weight average molecular weight of the dispersant 1 is measured as 500000.

A method for preparing a positive plate includes: dissolving 1.5 g of binder PVDF in 40 g of N-methylpyrrolidone (NMP), and adding 0.5 g of the above dispersant 1 after full dissolution, and performing stirring for 20 min; adding 20 g of carbon nanotube dispersion (solvent: NMP, solid content: 5 wt%) and performing stirring for 20 min; adding 97 g of lithium iron phosphate positive active material and performing stirring for 1.5 h to obtain a positive slurry; and coating the positive slurry on aluminum foil and performing drying at 130°C for 30 min to form a positive material layer, thereby completing the production of a lithium iron phosphate positive plate.

### Embodiment 2

A method for preparing a dispersant for a lithium ion battery includes:
dissolving N-vinylpyrrolidone, 1,3-diene, and 2-methyl-2-butenenitrile in DMF at a mass ratio of 5:80:15, adding an initiator azobisisobutyronitrile and a chain transfer agent dodecyl mercaptan, performing polymerization at 60°C for 4 hours at a pressure of 4 MPa, performing cooling to terminate the reaction, washing and drying a resulting reactant to obtain a dispersant 2', and hydrogenating the dispersant 2' to obtain a dispersant 2. A weight average molecular weight of the dispersant 2 is measured as 600000.

In a method for preparing a positive plate, 0.5 g of dispersant 1 in Embodiment 1 is replaced with 1.5 g of dispersant 2, 1.5 g of binder PVDF is replaced with 0.5 g of PVDF, and other conditions are the same as those in Embodiment 1.

### Embodiment 3

A method for preparing a dispersant for a lithium ion battery includes:
dissolving N-vinylpyrrolidone, 1,3-butadiene, and butyl acrylate in DMF in a mass ratio of 30:65:5, adding an initiator azobisisobutyronitrile and a chain transfer agent isobutanol, performing polymerization at 60°C for 4 hours at a pressure of 4 MPa, performing cooling to terminate the reaction, and washing and drying a resulting reactant to obtain a dispersant 3. A weight average molecular weight of the dispersant 3 is measured as 150000.

In a method for preparing a positive plate, 0.5 g of dispersant 1 in Embodiment 1 is replaced with 1 g of dispersant 3, 1.5 g of binder PVDF is replaced with 1 g of PVDF, and other conditions are the same as those in Embodiment 1.

### Embodiment 4

A method for preparing a dispersant for a lithium ion battery includes:
dissolving N-vinylpyrrolidone, 1,3-butadiene, and butyl acrylate in DMF in a mass ratio of 40:40:20, adding an initiator azobisisobutyronitrile and a chain transfer agent isobutanol, performing polymerization at 60°C for 4 hours at a pressure of 4 MPa, performing cooling to terminate the reaction, washing and drying a resulting reactant to obtain a dispersant 4', and hydrogenating the dispersant 4' to obtain a dispersant 4. A weight average molecular weight of the dispersant 4 is measured as 550000.

In a method for preparing a positive plate, 0.5 g of dispersant 1 in Embodiment 1 is replaced with 1.5 g of dispersant 4, 1.5 g of binder PVDF is replaced with 0.5 g of PVDF, and other conditions are the same as those in Embodiment 1.

### Embodiment 5

A method for preparing a dispersant for a lithium ion battery includes:
dissolving acrylamide, isoprene, and α-ethylacrylonitrile in DMF at a mass ratio of 10:80:10, adding an initiator azobisisobutyronitrile and a chain transfer agent ethyl acetate, performing polymerization at 60°C for 4 hours at a pressure of 4 MPa, performing cooling to terminate the reaction, washing and drying a resulting reactant to obtain a dispersant 5', and hydrogenating the dispersant 5' to obtain a dispersant 5. A weight average molecular weight of the dispersant 5 is measured as 400000.

A method for preparing a positive plate includes: dissolving 0.8 g of binder PVDF in 30 g of NMP, and adding 0.4 g of dispersant 5 after full dissolution, and performing stirring for 20 min; adding 10 g of carbon nanotube dispersion (solvent: NMP, solid content: 5 wt%) and 1.3 g of carbon black as a conductive agent, and performing stirring for 20 min; adding 97 g of positive active material NCM811 (LiNi_{0.8}Co_{0.1}Mn_{0.1}O₂) and performing stirring for 2 h to obtain a positive slurry; and coating the positive slurry on aluminum foil and performing drying at 130°C for 30 min to form a positive material layer, thereby completing the production of an NCM ternary positive plate.

### Embodiment 6

A method for preparing a dispersant for a lithium ion battery includes:
dissolving N-vinylpyrrolidone, 1,3-hexadiene, and acrylonitrile in dioxane at a mass ratio of 15:80:5, adding an initiator azobisisobutyronitrile and a chain transfer agent dodecyl mercaptan, performing polymerization at 60°C for 4 hours at a pressure of 4 MPa, performing cooling to terminate the reaction, washing and drying a resulting reactant to obtain a dispersant 6', and hydrogenating the dispersant 6' to obtain a dispersant 6. A weight average molecular weight of the dispersant 6 is measured as 300000.

In a method for preparing a positive plate, 0.4 g of dispersant 5 in Embodiment 5 is replaced with 0.6 g of dispersant 6, 0.8 g of binder PVDF is replaced with 0.6 g of PVDF, and other conditions are the same as those in Embodiment 5.

### Embodiment 7

A method for preparing a dispersant for a lithium ion battery includes:
dissolving N-hydroxymethylacrylamide, 1,3-butadiene, and acrylonitrile in DMF at a mass ratio of 10:75:15, adding an initiator azobisisobutyronitrile and a chain transfer agent ethyl acetate, performing polymerization at 60°C for 4 hours at a pressure of 4 MPa, performing cooling to terminate the reaction, washing and drying a resulting reactant to obtain a dispersant 7', and hydrogenating the dispersant 7' to obtain a dispersant 7. A weight average molecular weight of the dispersant 7 is measured as 600000.

In a method for preparing a positive plate, 0.4 g of dispersant 5 in Embodiment 5 is replaced with 0.8 g of dispersant 7, 0.8 g of binder PVDF is replaced with 0.4 g of PVDF, and other conditions are the same as those in Embodiment 5.

The following comparative examples 1-2 are set up below to highlight the beneficial effects of the present disclosure.

### Comparative example 1

A main difference between a positive plate in Comparative example 1 and that in Embodiment 1 is that no dispersant is added, 2 g of PVDF is used, and a larger amount of solvent is used during the preparation of the lithium iron phosphate positive plate.

A method for preparing a lithium iron phosphate positive plate in Comparative example 1 includes: fully dissolving 2 g of binder PVDF in 50 g of NMP; adding 20 g of carbon nanotube NMP dispersion (solid content: 5 wt%), and performing stirring for 20 min; adding 97 g of lithium iron phosphate positive active material and performing stirring for 3 h to obtain a positive slurry; and coating the positive slurry on aluminum foil and performing drying at 130°C for 30 min to form a positive material layer, thereby completing the production of a lithium iron phosphate positive plate.

### Comparative example 2

A main difference between a ternary positive plate in Comparative example 2 and that in Embodiment 2 is that no dispersant is added, 1.2 g of PVDF is used, and a larger amount of solvent is used during the preparation of the NCM ternary positive plate.

A method for preparing a ternary positive plate in Comparative example 2 includes: fully dissolving 1.2 g of binder PVDF in 40 g of NMP; adding 10 g of carbon nanotube dispersion (solid content: 5 wt%) and 1.3 g of carbon black as a conductive agent, and performing stirring for 20 min; adding 97 g of positive active material NCM811 (LiNi_{0.8}Co_{0.1}Mn_{0.1}O₂) and performing stirring for 3 h to obtain a positive slurry; and coating the positive slurry on aluminum foil and performing drying at 130°C for 30 min to form a positive material layer, thereby completing the production of an NCM ternary positive plate.

In order to support the beneficial effects of the present disclosure, the tested viscosity and solid content of the positive slurry in each embodiment and comparative example, content of the positive active material in the positive material layer, and peeling force of the positive plate are summarized in the following Table 1.

**Table 1 Summary of results of embodiments and comparative examples**

| | Viscosity of positive slurry (mPa·s) | Solid content of positive slurry (%) | Content of positive active material in positive material layer (%) | Peeling force of positive plate (N/mm) |
|---|---|---|---|---|
| Embodiment 1 | 3430 | 63.0 | 97.0 | 32 |
| Embodiment 2 | 3560 | 63.0 | 97.0 | 28 |
| Embodiment 3 | 3280 | 63.0 | 97.0 | 25 |
| Embodiment 4 | 3300 | 63.0 | 97.0 | 23 |
| Comparative example 1 | 3390 | 59.2 | 97.0 | 21 |
| | | | | |
| Embodiment 5 | 2560 | 71.7 | 97.0 | 30 |
| Embodiment 6 | 2470 | 71.7 | 97.0 | 28 |
| Embodiment 7 | 2600 | 71.7 | 97.0 | 33 |
| Comparative example 2 | 2710 | 66.9 | 97.0 | 25 |

The viscosities of the positive slurries in the above Table 1 are measured by using a rheometer with a reference model of Anton Paar MCR 302. The flexibilities of the positive plates are obtained through visual observation after folding the positive plates in half. The peeling force of the positive plate is tested by using a pressure sensitive binder tape peeling test, with a reference standard GB/T 2792-1998.

It may be learned from Table 1 that the viscosities of the positive slurries in Embodiments 1-4 approximate that in Comparative example 1, and the viscosities of the positive slurries in Embodiments 5-7 approximate that in Comparative example 2, both of which satisfy corresponding plate preparation requirements. Through comparison between Embodiments 1-4 and Comparative example 1 and between Embodiments 5-7 and Comparative example 2, it may be learned that the positive slurry including the dispersant provided in the embodiments of the present disclosure has a higher solid content and a shorter time is spent in producing a positive slurry with a desirable dispersion effect in a case that the content of the positive active material in the positive material layer remains unchanged. Moreover, only a small amount of binder PVDF is used, which indicates that the dispersant provided in the present disclosure may partially replace PVDF to provide a bonding function. In addition, the peeling force of the positive plate in the embodiments of the present disclosure is greater than the peeling force of the positive plate in the corresponding comparative example.

In addition, it may be learned through the comparison between Embodiment 1 and Embodiment 4 that when mass ratios of all components in the monomer raw material are the same, the peeling force of the positive plate using the dispersant prepared using acrylonitrile is slightly greater than that of the positive plate using the dispersant prepared using acrylate.

The foregoing embodiments show only several implementations of the present disclosure and are described in detail, which, however, are not to be construed as a limitation to the patent scope of the present disclosure. It should be noted that a person of ordinary skill in the art may make several transformations and improvements can be made without departing from the idea of the present disclosure. The transformations and improvements belong to the protection scope of the present disclosure. Therefore, the protection scope of the patent of the present disclosure shall be subject to the appended claims.

## Claims

1. A dispersant for a lithium ion battery, the dispersant comprising a structural unit A derived from a solvophilic monomer, a structural unit B derived from a conjugated diene monomer, and a structural unit C derived from a high-adhesion monomer, wherein the solvophilic monomer comprises one or both of N-vinylpyrrolidone and an acrylamide monomer; and the high-adhesion monomer comprises one or both of an unsaturated nitrile monomer and an acrylate monomer.

2. The dispersant according to claim 1, wherein based on a total amount of the dispersant, a molar proportion of the structural unit A is in a range of 5%-50%, a molar proportion of the structural unit B is in a range of 30%-90%, and a molar proportion of the structural unit C is in a range of 1%-30%.

3. The dispersant according to claim 1 or 2, wherein the acrylamide monomer comprises one or more of acrylamide, methylacrylamide, N, N-dimethylacrylamide, N-hydroxymethylacrylamide, N-butoxymethylacrylamide, N-hydroxymethylmethylacrylamide, and N-butoxymethylmethylacrylamide.

4. The dispersant according to any of claims 1 to 3, wherein the unsaturated nitrile monomer comprises one or more of acrylonitrile, α-methacrylonitrile, α-ethylacrylonitrile, butenenitrile, 2-methyl-2-butenenitrile, 2-methyl-3-butenenitrile, 4-methyl-3-pentanenitrile, α-chloroacrylonitrile, α-bromoacrylonitrile, 2-ethoxyacrylonitrile, and 3,3-dimethoxy-2-acrylonitrile;
the acrylate monomer comprises one or more of alkyl acrylate, alkyl methacrylate, hydroxyalkyl acrylate, and hydroxyalkyl methacrylate; and
the conjugated diene monomer comprises one or more of 1,3-butadiene, isoprene, 2,3-dimethyl-1,3-butadiene, 2-chloro-1,3-butadiene, 1,3-pentadiene, 1,3-hexadiene, 1,3-decadiene, and 2-methyl-1,5-heptadiene.

5. The dispersant according to any of claims 1 to 4, wherein a weight average molecular weight of the dispersant is in a range of 100000-600000.

6. A method for preparing a dispersant for a lithium ion battery, comprising:
performing a polymerization reaction on a monomer raw material comprising a solvophilic monomer, a conjugated diene monomer, and a high-adhesion monomer to obtain the dispersant for a lithium ion battery, wherein the solvophilic monomer comprises one or both of N-vinylpyrrolidone and an acrylamide monomer; and the high-adhesion monomer comprises one or both of an unsaturated nitrile monomer and an acrylate monomer.

7. The method according to claim 6, wherein the preparation method further comprises: performing a hydrogenation reaction on polymer formed through the polymerization reaction of the monomer raw material.

8. The method according to claim 6 or 7, wherein based on a total mass of the monomer raw material, a proportion of the solvophilic monomer is in a range of 5%-50%, a proportion of the conjugated diene monomer is in a range of 40%-90%, and a proportion of the high-adhesion monomer is in a range of 1%-20%.

9. A positive slurry, comprising a positive active material, a conductive agent, a dispersant, and a solvent, wherein the dispersant is the dispersant according to any of claims 1 to 5 or a dispersant prepared by using the method according to any of claims 6 to 8.

10. The positive slurry according to claim 9, wherein a mass fraction of the dispersant in the positive slurry does not exceed 5%.

11. A lithium ion battery, comprising a positive plate, wherein the positive plate comprises a current collector and a positive material layer arranged on the current collector; the positive material layer comprises a positive active material, a conductive agent, and a dispersant; and the dispersant is the dispersant according to any of claims 1 to 5 or a dispersant prepared by using the method according to any of claims 6 to 8.
